# EUROPEAN PATENT SPECIFICATION

(11) **EP 2 467 426 B1**
(45) Date of publication and mention of the grant of the patent: **29.04.2015**
(21) Application number: 10747550.1
(22) Date of filing: 20.08.2010
(51) Int. Cl.: C08L 25/04, C08L 67/02, D01F 6/92

(54) **PROCESS FOR PRODUCING SHAPED ARTICLES OF POLY(TRIMETHYLENE ARYLATE)/POLYSTYRENE**
VERFAHREN ZUR HERSTELLUNG VON FORMARTIKELN AUS POLY(TRIMETHYLENARYLAT)/POLYSTYROL
PROCÉDÉ POUR PRODUIRE DES ARTICLES FORMÉS DE POLY(ARYLATE DE TRIMÉTHYLÈNE)/POLYSTYRÈNE

(30) Priority: 20.08.2009 US 235403 P
(43) Date of publication of application: 27.06.2012
(73) Proprietor: E. I. du Pont de Nemours and Company, Wilmington, DE 19898 (US)
(72) Inventor: BATES, W., Douglas, Wilmington Delaware 19802 (US); DOBRICK, Brett, Collin, Wilmington Delaware 19807 (US)
(74) Representative: Matthews, Derek Peter
(86) International application number: PCT/US2010/046116
(87) International publication number: WO 2011/022616

(56) References cited:
- US-B2- 6 923 925
- DATABASE CA [Online] CHEMICAL ABSTRACTS SERVICE, COLUMBUS, OHIO, US; KANNO, KOJI ET AL: "Manufacture of sheath-core conjugate fibers form poly(propylene terephthalate) sheath with improved modulus and stretch recovery" XP002603696 retrieved from STN Database accession no. 131:74892 -& JP 11 189925 A (TORAY INDUSTRIES, INC., JAPAN) 13 July 1999 (1999-07-13)

## Description

The present application claims the benefit of US provisional patent application number 61/235403, filed August 20, 2009

### FIELD OF THE INVENTION

The present invention is directed to a masterbatch process for preparing melt spun fibers from a polymer blend comprising poly(trimethylene arylate), i.e. poly(trimethylene terephthalate), and polystyrene. The process allows for use of common, commercial scale equipment.

### BACKGROUND OF THE INVENTION

Poly(trimethylene terephthalate), also known as poly(propylene terephthalate), or as "3GT" polymer, is well known in the art. The properties and manufacturing thereof are described by Chuah in The Encyclopedia of Polymer Science, DOI 10.1002/0471440264.pst292.

J.C. Chang et al., US 6,923,925, describes a composition comprising poly(trimethylene dicarboxylate), especially poly(trimethylene arylate), most especially poly(trimethylene terephthalate) (PTT), with 0.01-10 % by weight of preferably high molecular weight polystyrene (PS) dispersed within the poly(trimethylene dicarboxylate), and having a PS particle size of less than 2 micrometers (µm). Only compositions in the concentration range of 1-2% PS are exemplified. It was found that PTT compositions comprising 1-2% by weight of PS, on the basis of total polymer weight, were capable of melt spinning into fiber at spinning speeds significantly higher than that achievable with PTT without PS. The manner by which the compositions were prepared was by co-feeding pellets of the two polymers into a twin screw extruder or by making a salt and pepper blend of pellets of the two polymers in the desired proportions and then feeding the resulting pellet mixture into a twin screw extruder. The extrudate was extruded as a strand and chopped into pellets. These blend pellets were then fed to a spinning machine to melt spin fiber.

U.S. Pat. No. 4,475,330 discloses a polyester multifilament yarn made from polyester filaments consisting essentially of (a) a copolymer of two or more monomers selected from the group consisting of ethylene terephthalate, trimethylene terephthalate and tetramethylene terephthalate, and/or (b) a blend of two or more polymers of ethylene terephthalate, trimethylene terephthalate and tetramethylene terephthalate. This patent describes blends of polyesters with 3 to 15% of non-crystalline polymer, preferably styrene polymers or methacrylate polymers.

The process of Chang et al., *op.cit.,* was developed to produce poly(trimethylene dicarboxylate) yarns, particularly partially oriented yarns, at high spin speeds. The advantages of the invention were obtained using a blend comprising poly(trimethylene dicarboxylate) and (PS). Achievement of commercial scale operation of the process of Chang et al., may present several problems. It could be very expensive to transition a commercial scale continuous melt polymerizer from a PTT product containing PS to a PTT product not containing PS. Employing a sidestream extruder and feeding in the required amount of PS to arrive at a 1% PS composition could require specially designed equipment to feed in the small proportion of PS needed.

The masterbatch, or concentrate, technology of the present invention represents a significant cost savings over the conventional practice of fiber spinning. Additionally, the composition described herein has utility in the preparation of toughened molded parts and films made from poly(trimethylene arylate) polymers.

### SUMMARY OF THE INVENTION

The present invention provides a process comprising melt blending a poly (trimethylene terephthalate)/polystyrene concentrate with a diluent comprising poly (trimethylene terephthalate) to form a poly (trimethylene terephthalate)/polystyrene spinning blend, the spinning blend comprising 0.5 to 1.5 weight-% polystyrene, based on the total weight of polymer, wherein the poly (trimethylene terephthalate)/polystyrene concentrate comprises 15 to 40 weight-% polystyrene,based on the total weight of polymer, and wherein the polystyrene in the spinning blend is dispersed in the poly (trimethylene terephthalate) in the form of particles or droplets having an average size of less than 500 nanometers.

### BRIEF DESCRIPTION OF THE DRAWINGS

Figure 1 is a schematic representation of one embodiment of melt feeding a spinneret according to the invention.
Figure 2 is a schematic representation of one embodiment of the fiber spinning process according to the invention.

### DETAILED DESCRIPTION

The present invention provides a process comprising melt blending a poly (trimethylene terephthalate)/polystyrene concentrate with a diluent poly (trimethylene terephthalate) to form a poly(trimethylene terephthalate) /polystyrene spinning blend comprising 0.5 to 1.5 wt% polystyrene, on the basis of the total weight of polymer, wherein the poly (trimethylene terephthalate)/polystyrene concentrate comprises 15 to 40 wt%, on the basis of the total weight of polymer, of polystyrene. As used herein, the term "PS" is an abbreviation for polystyrene.

In one embodiment, the process further comprises conveying the spinning blend to a shaped orifice and extruding the spinning blend through the shaped orifice to form an extrudate.

In one embodiment, the shaped orifice is one of a plurality of shaped orifices of a spinneret and the extrudate is a plurality of filaments. In one embodiment, the shaped orifice is a film die and the extrudate is a film. In one embodiment, the shaped orifice is a strand die, the extrudate is one or more strands, and the process further comprises cutting the strand into pellets. A spinneret is typically characterized as having a spin plate with an array of uniform holes, often 34, typically each about 0.2-0.4 mm in diameter. A strand die is typically a metal plate having one or more, but usually no more than 10, holes, each hole being about 3-6 mm in diameter. That is, generally speaking, the diameter of the holes in a strand die is about ten times greater than the diameter of the holes in a spinneret.

In the discussion following, the term "PTT" is an abbreviation for poly(trimethylene terephthalate). The term "PTT" is meant to encompass homopolymers and copolymers containing at least 70 mole % trimethylene terephthalate repeat units.

Further described is the use of a PTT/PS masterbatch suitable for use in preparing a composition useful in high speed melt spinning of PTT fiber.

Unless otherwise noted, the polymer compositions are described herein in terms of weight per cent of ingredients based upon the total weight of polymers. The percentage of PS in the composition is expressed as a percentage of the total weight of the polymers, including, for example, PTT, and any other additional polymers that may be incorporated into the composition hereof.

When a range of numerical values is provided, it shall be understood to encompass the end-points of the range unless specifically stated otherwise. Numerical values are to be understood to have the precision of the number of significant figures provided. For example, the number 40 shall be understood to encompass a range from 35.0 to 44.9, whereas the number 40.0 shall be understood to encompass a range from 39.50 to 40.49.

For the purpose of the present invention, the term "copolymer" shall be understood to encompass terpolymers, tetrapolymers and so forth, as well as dipolymers.

In one aspect, the present invention provides a composition comprising PTT and 15% to 40 % by weight of PS dispersed therewithin. In the composition of the invention, the PTT is a continuous phase or "matrix" and the PS is a discontinuous phase dispersed within the PTT matrix. The composition contemplated according to the invention includes both a molten composition and a solid composition, and any transition states therebetween. In one embodiment, the PTT is molten and the PS is dispersed within the PTT matrix as molten droplets. In an alternative embodiment, the PTT is solid and the PS is dispersed within the PTT matrix as solid particles.

In one embodiment, the composition comprises 50 to 85 weight % of the PTT, and 15 % to 40 weight% PS, by weight of the total polymer in the composition, and up to 30 weight % of other polyesters. Other polyesters include but are not limited to poly (ethylene terephthalate), poly(butylene terephthalate), and poly (ethylene naphthalate). In a further embodiment, the composition comprises 50 to 80 % of the PTT, and 20 to 30 % of PS, and up to 30 % of other polyesters, *supra.*

Suitable PTT polymer is formed by the condensation polymerization of 1,3-propanediol and terephthalic acid or dimethyl terephthalate. One or more suitable comonomers for copolymerization therewith is selected from the group consisting of linear, cyclic, and branched aliphatic dicarboxylic acids or esters having 4-12 carbon atoms (for example butanedioic acid, pentanedioic acid, hexanedioic acid, dodecanedioic acid, 1,4-cyclohexanedicarboxylic acid, and their corresponding esters); aromatic dicarboxylic acids or esters other than terephthalic acid or ester and having 8-12 carbon atoms (for example isophthalic acid and 2,6-naphthalenedicarboxylic acid); linear, cyclic, and branched aliphatic diols having 2-8 carbon atoms (other than 1,3-propanediol, for example, ethanediol, 1,2-propanediol, 1,4-butanediol, 3-methyl-1,5-pentanediol, 2,2-dimethyl-1,3-propanediol, 2-methyl-1,3-propanediol, and 1,4-cyclohexanediol); and aliphatic and aromatic ether glycols having 4-10 carbon atoms (for example, hydroquinone bis(2-hydroxyethyl) ether, or a poly (ethylene ether) glycol having a molecular weight below about 460, including diethyleneether glycol). The comonomer typically is present in the PTT copolymer at a level in the range of about 0.5 to about 15 mole %, and can be present in amounts up to 30 mole %.

The PTT can contain minor amounts of other comonomers; such comonomers are usually selected so that they do not have a significant adverse affect on properties. Such other comonomers include 5-sodium-sulfoisophthalate, for example, at a level in the range of about 0.2 to 5 mole %. Very small amounts of trifunctional comonomers, for example trimellitic acid, can be incorporated for viscosity control. The PTT can be blended with up to 30 mole percent of other polymers. Examples are polyesters prepared from other diols, such as those described *supra.*

In one embodiment, the PTT contains at least 85 mol% of trimethylene terephthalate repeat units. In a further embodiment, the PTT contains at least 90 mol% of trimethylene terephthalate repeat units, In a still further embodiment the PTT contains at least 98 mol- % of of trimethylene terephthalate repeat units. In a still further embodiment the PTT contains 100 mol% of trimethylene terephthalate repeat units.

In one embodiment, suitable PTT is characterized by an intrinsic viscosity (IV) in the range of 0.70 to 2.0 dl/g. In a further embodiment, suitable PTT is characterized by an IV in the range of 0.80 to 1.5 dl/g. In a still further embodiment, suitable PTT is characterized by an IV in the range of 0.90 to 1.2 dl/g.

In one embodiment, suitable PTT is characterized by a number average molecular weight (Mₙ) in the range of 10,000 to 40,000 Da. In a further embodiment suitable PTT is characterized by Mₙ in the range of 20,000 to 25,000 Da.

In one embodiment, a polystyrene is selected from the group consisting of polystyrene homopolymer, α-methyl-polystyrene, and styrene-butadiene copolymers and blends thereof. In one embodiment, the polystyrene is a polystyrene homopolymer. In a further embodiment, the polystyrene homopolymer is characterized by Mₙ in the range of 5,000 to 300,000 Da. In a still further embodiment, Mₙ of the polystyrene homopolymer is in the range of 50,000 to 200,000 Da. In a still further embodiment Mₙ of the polystyrene homopolymer is in the range of 75,000 to 200,000 Da. In a still further embodiment, Mₙ of the polystyrene homopolymer is in the range of 120,000 to 150,000 Da. Useful polystyrenes can be isotactic, atactic, or syndiotactic. High molecular weight atactic polystyrene is preferred.

Polystyrenes useful in this invention are commercially available from many suppliers including Dow Chemical Co. (Midland, Mich.), BASF (Mount Olive, N.J.) and Sigma-Aldrich (Saint Louis, Mo.).

In another aspect of the invention, PTT and PS are melt blended and, then, extruded in the form of a strand that is subsequently cut into pellets. Other forms of melt blending and subsequent comminution, such as into flake, chips, or powder, can also be performed. In one embodiment, the pellets are then remelted, diluted with additional PTT, and extruded into filaments. In another embodiment, the pellets are remelted and extruded into films, with or without dilution.

The polymer blend comprises poly(trimethylene terephthalate) and a styrene polymer. In some embodiments these will be the only two materials in the blend and they will total 100 weight %. However, in many instances the blend will have other ingredients such as are commonly added to polyester polymers in commercial use. Such additives include but are not limited to other polymers, plasticizers, UV absorbers, flame retardants, dyestuffs, and so on. Thus, the total of the poly(trimethylene terephthalate) and polystyrene will not be 100 weight %.

In one embodiment, the composition is in the form of a solid wherein the polystyrene is in the form of particles having an average size of less than 500 nanometers, the polystyrene is polystyrene homopolymer at a concentration of 20 to 30 wt%; and, the poly (trimethylene arylate) is poly (trimethylene terephthalate) comprising at least 98 mol% of trimethylene terephthalate monomer units.

In a further aspect, the invention provides a process comprising combining poly (trimethylene terephthalate) and 15 % to 40% by weight, on the basis of total polymer weight, of polystyrene, melting the poly (trimethylene terephthalate) and polystyrene, and melt blending the thus melted poly (trimethylene terephthalate) and polystyrene in a high shear melt mixer to provide a melt composition comprising a poly (trimethylene terephthalate) and a polystyrene dispersed therewithin, the polystyrene at a concentration 15% to 40% by weight on the basis of total polymer weight.

In one embodiment of the process hereof, the PS is at a concentration of 20 % to 30 % by weight on the basis of total polymer weight.

In one embodiment of the process hereof, the PTT is characterized by an IV in the range of 0.90 to 1.2 dl/g.

In one embodiment of the process hereof, the PS is PS homopolymer.

In a further embodiment of the process hereof, the PS homopolymer is characterized by a number average molecular weight of 75,000 to 200,000 Da.

In one embodiment of the process hereof, the polystyrene is polystyrene homopolymer at a concentration of 20 to 30 wt% and is characterized by a number average molecular weight of 75,000 to 200,000 Da; the poly (trimethylene terephthalate) comprises 98 mol-% of trimethylene terephthalate monomer units and whereof the intrinsic viscosity is in the range of 0.90 to 1.2 dl/g.

The PTT and PS can be melt blended by any known technique, including but not limited to an embodiment (a) comprising melting and mixing simultaneously from separate feeds, as, for example, in a co-fed twin screw extruder; an embodiment (b) comprising pre-mixing the unmelted polymers in a separate apparatus before melt blending, as, for example, in tumble blending pellets or flake of the polymers prior to feeding a twin-screw extruder, or an embodiment (c) comprising melting each polymer separately and then mixing the melts, as, for example, in feeding a twin screw extruder with the PTT in molten form from a continuous melt polymerizer, and feeding the twin-extruder with PS in molten form from a satellite single or twin screw extruder.

Important aspects of the composition hereof include, but are not limited to, the size of the PS particles formed within the PTT matrix, and the volume homogeneity of the PS particle distribution within the PTT matrix. Average particle size greater than 500 nm is not desirable from the standpoint of good fiber spinning performance. Additionally, spinning of uniform fiber, both along a single end, and end to end, depends expressly upon the homogeneity of the volume distribution of the PS particles. It is expected that in the actual melt processing thereof, the PS particles melt to form molten droplets that are dispersed within a molten PTT matrix.

The temperature in the melt mixer should be above the melting points of both the PTT and the PS but below the lowest decomposition temperature of any of the ingredients. Specific temperatures will depend upon the particular attributes of the polymers employed. In typical practice, melt temperature is in the range of 200 °C to 270 °C.

Both fine particle size of PS and volume homogeneity of the dispersion of PS in the PTT depend upon the application of high shear melt blending. This is especially true for the high concentrations of PS employed in the compositions hereof. The amount of shear force applied to the melt depends upon the rotational speed of the mixing elements, the viscosity of the melt, and the residence time of the melt in the mixing zone. If the shear forces are too low there is a tendency for the PS to not break up to begin with, or to agglomerate rapidly into droplets greater than 500nm in size.

The melt blending process can be performed both batchwise and continuously. So called high shear mixers such as are commonly employed in the art of polymer compounding are suitable. Examples of suitable commercially available high shear batch mixers include, but are not limited to, Banbury mixers and Brabender mixers. Examples of continuous high shear mixers include co-rotating twin-screw extruders and Farrel Continuous Mixers Counter-rotating twin screw extruders are also suitable. In general, suitable high shear mixers are those that are capable of exerting on a polymer melt a minimum shear rate of 50/s, with 100/s preferred.

In one embodiment, the PTT/PS blend so produced is extruded into one or more strands ca. 1/8" to 3/16" in diameter that are then cut up into pellets.

The pellets so produced can be employed as they are in injection or compression molding, and melt casting of films. The pellets so produced can also be employed as a concentrate or masterbatch useful in the production of melt spun fibers.

The pellets so produced comprise PTT polymer, described *supra,* and PS polymer, described *supra,* wherein the PS polymer is in the form of particles less than or equal to 500 nm in size dispersed in a continuous phase formed by the PTT polymer. In one embodiment, the concentration of the PS particles is in the range of 15 to 40 % by weight. In a further embodiment, the concentration of PS particles is in the range of 20 to 30 wt%. These pellets shall be known as "concentrate pellets."

In a further aspect of the invention, the concentrate pellets are melt blended with PTT diluent to form a homogenous melt blend that has a lower concentration of PS than is found in the concentrate. The PTT diluent may or may not contain PS, but if it does contain PS, the concentration thereof is lower than that found in the concentrate pellets. In the practice of the invention, the concentrate pellets are combined with diluent PTT to form a homogeneous composition comprising 0.5 to 1.5% of PS. This composition shall be known as the "spinning blend."

In alternative embodiments, both the concentrate and the diluent may be in the form of chips, flakes, or powder instead of pellets. In the discussion herein, wherever pellets are recited, any or all of the alternative forms may be substituted therefor. However, it is found in the polymer art, that extrusion-processing performance is best when the polymeric components are fed as pellets rather than chips, flakes, or powder.

As in the case of melt blending the PS and the PTT, described *supra,* the PTT diluent and the concentrate pellets may be combined in any of a variety of ways. In one embodiment the diluent is initially in the form of pellets. In a further embodiment, the pellets of diluent and concentrate are first tumble-blended and the pellet blend so formed fed to a high shear melt mixer, either batch or continuous. In an alternative embodiment, the diluent can be in the form of a melt and the concentrate pellets fed thereinto in a high shear mixer.

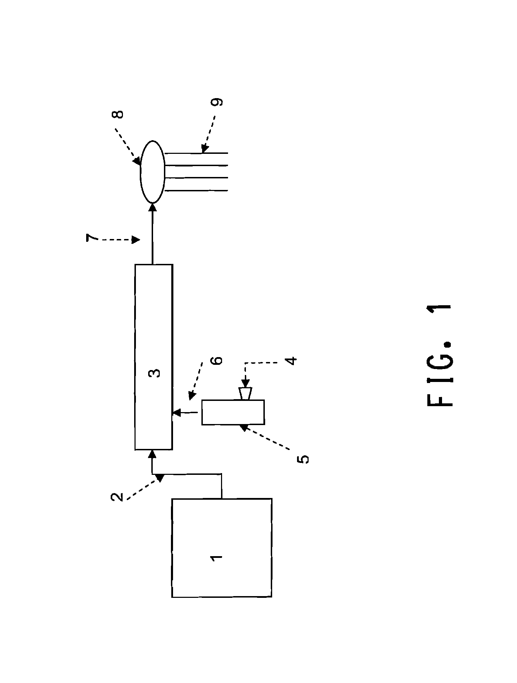

In one embodiment, the diluent is fed as a melt from a continuous melt polymerizer to a twin screw extruder, and downstream from the point of introduction of the diluent, the concentrate pellets are fed to a satellite extruder that melts and feeds the concentrate in molten form into the diluent melt stream. This embodiment is shown schematically in Figure 1. PTT is produced in a continuous melt polymerizer, **1,** from which it is conveyed in molten form via transfer line, **2,** to a twin-screw extruder, **3.** Simultaneously, the concentrate pellets are fed via a weight-loss feeder, **4,** or other pellet feeder means, to a satellite extruder, **5,** wherein the concentrate pellet is melted and fed in molten form via transfer line, **6,** to twin-screw extruder,**3**, either at or upstream from the mixing zone of the twin-screw extruder, **3.** In the twin-screw extruder a PTT/PS melt blend of the concentrate and diluent is formed. The resulting melt blend is fed via transfer line, **7,** to a spin block comprising a spinneret, **8,** from which continuous filaments, **9,** are extruded.

In an alternative embodiment, the resulting PTT/PS melt blend is extruded as a strand which is subsequently cut into pellets. The pellets so formed shall be referred to as "PTT/PS blend pellets." The PTT/PS blend pellets can then be fed to an extruder to be melted and fed to a spinneret for melt spinning of fiber.

In one embodiment, the concentration of the PS in the PTT/PS blend pellets formed by combining the concentrate with the diluent, *supra,* is in the range of 0.5 to 1.5 wt%. As described in Chang et al., *op.cit.,* the PTT/PS blend pellets so formed exhibit the capability of being melt spun at higher speeds than PTT pellets without PS.

As indicated in Figure 1, and as is generally true for melt spinning of polymer fibers, the polymer melt is fed to the spinneret via a transfer line. The melt input to the transfer line from the extruder is in general quite turbulent. However, the spinneret feed must be laminar in order to achieve uniform flow through the plurality of holes in the spinneret. It is in the transfer line that the melt flow shifts from turbulent to laminar.

It has been found in the practice of the invention that there is a threshold concentration of PS above which an unacceptable degree of PS agglomeration occurs, causing the PS droplet size to exceed 500 nm, thus interfering with the achievement of the desired high spinning speed. The particular value of the threshold concentration depends upon the length of the transfer line, the viscosities of the PS and PTT, and the residence time of the melt in the transfer line..

While not limited by any theoretical considerations, a theoretical model of laminar flow of the spinning composition hereof shows that a critical concentration of PS exists below which agglomeration and particle growth do not occur. It is desirable to operate the process hereof in that region. The specific value of the needed concentration depends upon the shear rate and residence time applied to the melt in laminar flow. It is found for example that at a shear rate of 5/s and a residence time of 6 seconds as found in a transfer line, the needed concentration of PS is 1.2%.

Fiber spinning can be accomplished using conventional apparatus and procedures that are in widespread commercial use. As a practical matter, it is found that for spinning filaments fine denier filaments of 3 dpf or less, a PS concentration of > 3% leads to a degradation in mechanical properties of the fiber so produced. It is further found that at 5% PS, fine denier filaments cannot be melt spun at all.

The PTT/PS spinning blend suitable for fiber spinning is characterized by a concentration in the range of 0.5 to1.5 wt% of PS particles characterized by an average size of less than 500 nm. Prior to melt spinning, the polymer blend pellets are dried to a moisture level of <30 ppm to avoid hydrolytic degradation during melt spinning. Any means for drying known in the art is satisfactory. In one embodiment, a closed loop hot air dryer is employed. Typically, the PTT/PS blend is dried at 130 °C and a dew point of <-40 °C for 6 h. The thus dried PTT/PS polymer blend is melt spun at 250-265 °C into fibers using conventional processing machines as appropriate for bulk continuous filaments (BCF), partially oriented yarn (POY), spin-draw yarn (SDY), and staple fiber.

In a typical melt spinning process, one embodiment of which is described in detail, *infra,* the dried polymer blend pellets are fed to an extruder which melts the pellets and supplies the resulting melt to a metering pump, which delivers a volumetrically controlled flow of polymer into a heated spinning pack via a transfer line. The pump must provide a pressure of 10-20 MPa to force the flow through the spinning pack, which contains filtration media (eg, a sand bed and a filter screen) to remove any particles larger than a few micrometers. The mass flow rate through the spinneret is controlled by the metering pump. At the bottom of the pack, the polymer exits into an air quench zone through a plurality of small holes in a thick plate of metal (the spinneret). While the number of holes and the dimensions thereof can vary greatly, typically a single spinneret hole has a diameter in the range of 0.2- 0.4 mm. A typical flow rate through a hole of that size tends to be in the range of about 1-5 g/min. Numerous cross-sectional shapes are employed for spinneret holes, although circular cross-section is most common. Typically a highly controlled rotating roll system through which the spun filaments are wound controls the line speed. The diameter of the filaments is determined by the flow rate and the take-up speed; and not by the spinneret hole size.

The properties of the produced filaments are determined by the threadline dynamics, particularly in the region between the exit from the spinneret and the solidification point of the fibers, which is known as the quench zone. The specific design of the quench zone, air flow rate across the emerging still motile fibers has very large effects on the quenched fiber properties. Both transverse (or lateral) quench and radial quench are in common use. After quenching or solidification, the fibers travel at the take-up speed, which is typically 100-200 times faster than the exit speed from the spinneret hole. Thus, considerable acceleration (and stretching) of the threadline occurs after emergence from the spinneret hole. The amount of orientation that is frozen into the spun fiber is directly related to the stress level in the fiber at the solidification point.

In one embodiment, the process comprises melt blending a poly (trimethylene terephthalate)/polystyrene concentrate with a diluent comprising poly (trimethylene terephthalate) to form a poly(trimethylene terephthalate)/polystyrene spinning blend, the spinning blend comprising 0.5 to 1.5 % by weight polystyrene, on the basis of the total weight of polymer, wherein the poly (trimethylene terephthalate)/polystyrene concentrate comprises 20 to 30 % by weight polystyrene, on the basis of the total weight of polymer; wherein the poly(trimethylene terephthalate) comprises at least 98% of trimethylene terephthalate monomer units, and wherein the intrinsic viscosity of the poly(trimethylene terephthalate) is in the range of 0.9-1.2 dl/g; the polystyrene is polystyrene homopolymer 75,000 to 200,000 Da..

In a further embodiment, the process further comprises conveying the melted spinning blend to a strand die, extruding at least one strand, and cutting the strand.into pellets.

In an alternative further embodiment, the process further comprises conveying the melted spinning blend to a spinneret, and, extruding a plurality of filaments therefrom.

The invention is further described but not limited by the following specific embodiments.

### EXAMPLES

### Example 1-6

Sorona^{®} Bright PTT resin (1.02 IV available from the DuPont Company, Wilmington, DE) polytrimethylene terephthalate was combined with polystyrene (168 M KG 2 available from BASF) in the amounts shown in Table 1. The PTT was dried in a vacuum oven with a nitrogen purge at 120°C for 14 hours prior to use. The two polymers were individually weight-loss fed to the fourth barrel section of a Werner & Pfleiderer ZSK-30 co-rotating twin screw extruder. The feed rates employed are shown in Table 1 in pounds per hour (pph, where 1 pph = 0.45 kg/hr). The extruder had a 30 mm diameter barrel constructed with 13 barrel sections provided in alternating arrangement with two kneading zones and three conveying sections, the extruder having an L/D ratio of 32. Each barrel section was independently heated. Sections 1-4 were set at 25°C, Sections 5-13 were set at 210°C, the 3/16" (4.8 mm) strand die was also set at 210°C. A vacuum was applied to barrel segment 8. The screw speed was as indicated in Table 1. Table 1 also shows the composition of the feed, the rate of output, and the melt temperature. The polymer was quenched in water immediately upon exiting the die and was then pelletized using standard pelletizing equipment into 1/8" 3.2 mm) pellets.

| Example # | Compostion (PTT/PS) | PTT Set Feed Rate (pph) | Polystyrene Set Feed Rate (pph) | Output Rate (pph) | RPM of screws | Melt Temperature (°C) |
|---|---|---|---|---|---|---|
| 1 | 85/15 | 25.5 | 4.5 | 30.4 | 200 | 278 |
| 2 | 80/20 | 24.0 | 6.0 | 30.0 | 250 | 277 |
| 3 | 75/25 | 22.5 | 7.5 | 30.2 | 200 | 268 |
| 4 | 70/30 | 14.0 | 6.0 | 20.0 | 200 | 265 |
| 5 | 65/35 | 13.0 | 7.0 | 20.0 | 200 | 263 |
| 6 | 60/40 | 12.0 | 8.0 | 23.0 | 200 | 270 |

### Example 7

Sorona® Semi Dull PTT resin (1.02 IV - 0.3 wt% TiO₂, available from the DuPont Company) was combined with 8 wt% of the polystyrene of Examples 1-6. The PTT was dried prior to use as in Examples 1-6. The two polymers were independently fed by weight loss feeders at 184 pph (83.5 kg/hr) of PTT and 16 (7.3 kg/hr) pph of PS using a K-tron S-200 single screw feeder and a K-tron K2ML-T20 twin screw spiral feeder for the PTT and PS, respectively (K-Tron International, Inc., Pitman, NJ), to the second barrel section of a 40 mm co-rotating twin-screw extruder (Werner & Pfleiderrer Corp., Ramsey, NJ) provided with 10 independently heated barrel sections. The throat temperature was 50°C, barrel sections 1-4 were set at 230°C, barrel section 5 was set at 225 °C, barrel sections 6-9 were set at 200°C, and barrel section 10 was set at 245 °C, and the 6-hole strand die, provided with 3/16" (4.8 mm) holes, was set at 245°C, melt temperature using this heating profile was 255°C. The six output strands were water-quenched and pelletized into 1/8" 3.2 mm) pellets.

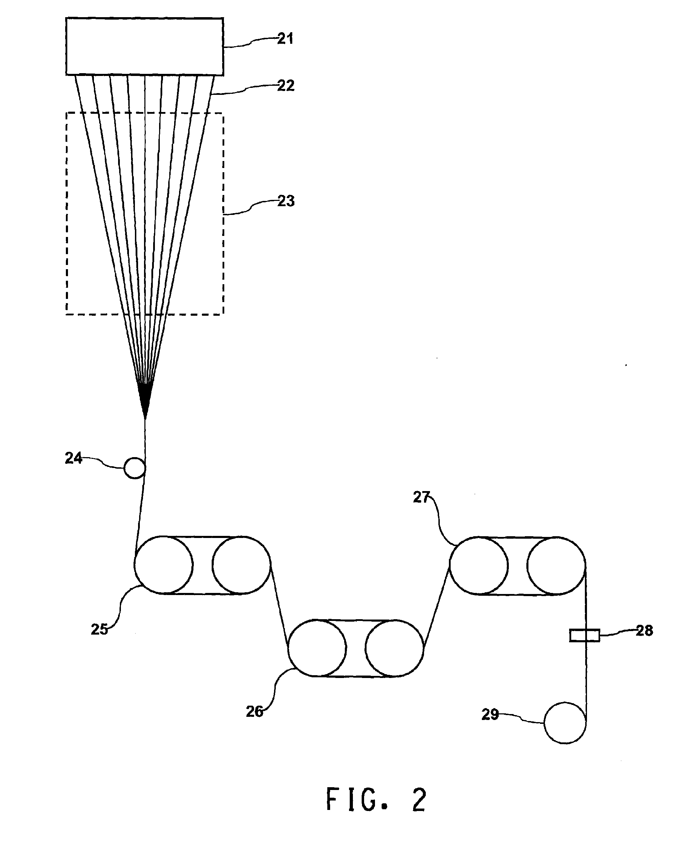

The process for spinning was as shown in Figures 1 and 2 except that the continuous melt polymerizer shown in Figure 1 was replaced by a weight-loss pellet feeder. Referring to Figure 1, pellets of Sorona^{®} Semi Dull PTT resin were employed as the diluent polymers, as described *supra.* The pellets were fed to a 28 mm co-rotating twin-screw extruder (Werner & Pfleiderrer Corp., Ramsey, NJ) at 41.58 g/min. Simultaneously, the 8 wt% PS/PTT pellets prepared *supra* were fed via a weight-loss feeder, 4, to a satellite extruder that has 4 independently heated barrel sections (Prism corotating twin screw extruder, Thermo Scientific, Waltham, MA), **5.** Barrel section 1 was set to 250°C and barrel sections 2-4 were set to 260°C. A gear pump set to 260°C delivered the 8 wt% PS/PTT polymer melt to the 28 mm extruder, **3,** in barrel section 2, at a rate of 4.62 g/min. The 28 mm twin-screw extruder was provided with 10 barrel sections set at 265 °C. The resulting melt temperature at the die exit was 265°C. In the 28 mm twin screw extruder the 8 wt% PS/PTT melt blend of the concentrate and diluent PTT melt, were mixed to form a 0.8 wt% PS/PTT polymer melt blend, which was fed via transfer line, **7,** to a spin pack, **8,** containing a sand filter (25/50 layer on top of a 50/325 mesh layer) to the 34 hole spinneret. The holes were of round cross-section and 0.012" (0.30 mm) in diameter and 0.022" (0.56 mm) in length from which continuous 2.2 denier per filament yarns were extruded.

Figure 2 is a schematic representation of the fiber spinning process. 34 filaments, **22,** were extruded through spinneret,**21**. The filaments passed through a cooling zone, **23,** formed into a bundle, and passed over a finish applicator, **24.** The cooling zone comprised cross-flow quench air at room temperature and at 60% relative humidity and a velocity of 40 feet/min. Following the finish applicator, **24,** the filament bundle passed to a pair of feed rolls, **25,** set at 75 °C. The filament bundle was wrapped around the feed rolls 6 times. From the feed rolls, the filament bundle was passed to a pair of draw rolls set at 125 °C, wrapped around the draw rolls 8 times. Draw roll speed was 4500 m/min while the feed roll speed was 2000 m/min. From the draw rolls, the filament bundle was passed to a pair of let-down rolls, **27,** operated at room temperature and at a speed 1-2% faster than the draw rolls speed. The filament bundle was wrapped around the let-down rolls 10 times. From the let-down rolls, the filament bundle passed though an interlace jet, and thence to a wind-up operated at 4445 m/min. The fiber so prepared was characterized as 2.32 dpf, with a tenacity of 2.84 g/denier.

### Example 8

Sorona^{®} Bright PTT resin was combined with 20 weight% of the polystyrene of Examples 1-6. The PTT was dried prior to use as in feeders at 28 pph of PTT and 7 pph PS into the 4^{th} barrel section of a Werner & Pfleiderer ZSK-30 co-rotating twin screw extruder provided with 13 independently heated barrel sections. The throat temperature and first barrel temperature were set at 190°C, with the following 12 sections set at 210°C. The polymer was extruded through a single stand die with a 3/16" (4.8 mm) hole. The polymer strand was then water-quenched and pelletized into 1/8" (3.2 mm) pellets.

Approximately 10 g of the pellets so prepared were placed between two sheets of 0.006 inch (0.15 mm) thick poly(tetrafluoro ethylene)-coated fiber glass release sheets. These sheets were then placed between the platens of a hydraulic press (PHI, City of Industry, CA). The press was heated to 260°C and 4.5 psi (31 kPa) gauge pressure until the pellets had melted and the pressure stabilized. Then the pressure was raised to 22.5 psi (155 kPa) gauge pressure, and held for 5 minutes. The pressure was then released, and the release sheets were removed from the press and placed into an ice water bath. A film having a thickness of less than 0.010 in (0.25 mm) was removed from the release sheet and compared to a similar sheet made of PTT pellets that did not contain polystyrene. The film made with 20% polystyrene was more opaque than the film without polystyrene, while feeling the same with relation to brittleness and tensile properties.

### Example 9

0.4 lbs (0.18 kg) of the PTT/PS pellets produced in Example 8 were mixed with 9.6 lbs (4.4 kg) of Sorona® Bright PTT resin pellets containing no PS. The resulting pellet mixture was fed to a Werner & Pfleiderer extruder with a 28 mm diameter barrel and 6 barrel segments each set to 240 °C. Screw speed was 150 rpm. A melt temperature of 268°C was determined by hand at the exit of the extruder. The extruder output was fed to a 10 inch coat hanger film die set at 239 °C. The die gap was set at 0.010 in (0.25 mm) and the die pressure was 296 psi (2.04 MPa). A film was cast onto a water-cooled rotating casting drum, and thence to a wind-up operating at 8 feet per minute (2.4 metres per minute). The thus mm) and was 10 in (25.4 cm) wide. A section of the film so produced was examined by transmission electron microscopy (TEM). By visual inspection, the preponderance of PS particles were characterized by 150 nm particle size

### Example 10

Sorona® Semi Dull PTT resin is combined with 20 wt% of the polystyrene of Examples 1-6. The PTT is dried prior to use as in Examples 1-6. The two polymers are independently fed by weight loss feeders at 160 pph (72.5 kg/hr) of PTT and 40 pph (18 kg/hr) of PS using a K-tron S-200 single screw feeder and a K-tron K2ML-T20 twin screw spiral feeder for the PTT and PS, respectively (K-Tron International, Inc., Pitman, NJ), to the second barrel section of a 40 mm co-rotating twin-screw extruder (Werner & Pfleiderrer Corp., Ramsey, NJ) provided with 10 independently heated barrel sections. The throat temperature is 50°C, barrel sections 1-4 are set at 230°C, barrel section 5 is set at 225 °C, barrel sections 6-9 are set at 200°C, and barrel section 10 is set at 245 °C. The 6-hole strand die, provided with 3/16" (4.8 mm) holes, is set at 245°C.. The six output strands are water-quenched and pelletized into 1/8" (3.2 mm) PTT/20%PS pellets.

The process for spinning is as shown in Figures 1 and 2 except that the continuous melt polymerizer shown in Figure 1 is replaced by a weight-loss pellet feeder. Referring to Figure 1, pellets of Sorona^{®} Semi Dull PTT resin are are fed to a 28 mm co-rotating twin-screw extruder (Werner & Pfleiderrer Corp., Ramsey, NJ) at 44.35 g/min. Simultaneously, the PTT/20%PS pellets from the preceding paragraph are fed via a weight-loss feeder, 4, to a satellite extruder that has 4 independently heated barrel sections (Prism corotating twin screw extruder, Thermo Scientific, Waltham, MA), 5. Barrel section 1 is set to 250°C and barrel sections 2-4 are set to 260°C. A gear pump set to 260°C delivers the 8 wt% PS/PTT polymer melt to the 28 mm extruder, **3,** in barrel section 2, at a rate of 1.85 g/min. The 28 mm twin-screw extruder is provided with 10 barrel sections set at 265 °C. In the 28 mm twin screw extruder the 20 wt% PS/PTT melt blend of the concentrate and diluent PTT melt, are mixed to form a 0.8 wt% PS/PTT polymer melt blend, which is fed via transfer line, **7,** to a spin pack, **8,** containing a sand filter (25/50 layer on top of a 50/325 mesh layer) to the 34 hole spinneret. The holes are of round cross-section and 0.012" (0.30 mm) in diameter and 0.022" (0.56 mm) in length from which continuous 2.2 denier per filament yarns are extruded.

Figure 2 is a schematic representation of the fiber spinning process. 34 filaments, **22,** are extruded through spinneret, **21.** The filaments pass through a cooling zone, **23,** are formed into a bundle, and pass over a finish applicator, **24.** The cooling zone comprises cross-flow quench air at room temperature and at 60% relative humidity and a velocity of 40 feet/min. Following the finish applicator, **24,** the filament bundle passes to a pair of feed rolls, **25,** set at 75 °C. The filament bundle is wrapped around the feed rolls 6 times. From the feed rolls, the filament bundle passesto a pair of draw rolls set at 125 °C, wrapped around the draw rolls 8 times. Draw roll speed is 4500 m/min while the feed roll speed is 2000 m/min. From the draw rolls, the filament bundle passes to a pair of let-down rolls, **27,** operated at room temperature and at a speed 1-2% faster than the draw rolls speed. The filament bundle is wrapped around the let-down rolls 10 times. From the let-down rolls, the filament bundle passes though an interlace jet, and thence to a wind-up operated at 4445 m/min. The fiber so prepared is characterized as 2.32 dpf, with a tenacity of 2.84 g/denier.

## Claims

1. A process comprising melt blending a poly (trimethylene terephthalate) /polystyrene concentrate with a diluent comprising poly (trimethylene terephthalate) to form a poly (trimethylene terephthalate)/polystyrene spinning blend, the spinning blend comprising 0.5 to 1.5 weight-% polystyrene, based on the total weight of polymer, wherein the poly (trimethylene terephthalate) /polystyrene concentrate comprises 15 to 40 weight-% polystyrene,based on the total weight of polymer, and wherein the polystyrene in the spinning blend is dispersed in the poly (trimethylene terephthalate) in the form of particles or droplets having an average size of less than 500 nanometers.

2. The process of Claim 1 further comprising conveying the spinning blend to a shaped orifice and extruding the spinning blend through the shaped orifice to form an extrudate.

3. The process of Claim 1 wherein the poly(trimethylene terephthalate) comprises at least 98 mol-% of trimethylene terephthalate monomer units and whereof the intrinsic viscosity is in the range of 0.90 to 1.2 deciliters/gram.

4. The process of Claim 2 wherein the shaped orifice is one of a plurality of shaped orifices of a spinneret and the extrudate is a plurality of filaments.

5. The process of Claim 2 wherein the shaped orifice is a strand die, the extrudate is one or more strands, and the process further comprising cutting the strand into pellets.

6. The process of Claim 2 wherein the shaped orifice is a film die and the extrudate is a film.

7. The process of Claim 1 wherein the concentrate comprises 20 to 30 weight-% polystyrene, on the basis of the total weight of polymer.

8. The process of Claim 1 wherein the polystyrene is polystyrene homopolymer.

9. The process of Claim 1 wherein the polystyrene is polystyrene homopolymer at a concentration of 20 to 30 weight-% in the concentrate and is **characterized by** a number average molecular weight of 75,000 to 200,000 Daltons; the process further comprising conveying the melted spinning blend to a strand die, extruding at least one strand, and cutting the strand into pellets.

10. The process of Claim 1 wherein the polystyrene is polystyrene homopolymer at a concentration of 20 to 30 weight-% in the concentrate and is **characterized by** a number average molecular weight of 75,000 to 200,000 Da; the process further comprising conveying the spinning blend to a spinneret comprising a plurality of shaped orifices and extruding a plurality of filaments.

## Patentansprüche

1. Verfahren, umfassend Schmelzemischen eines Poly(trimethylenterephthalat)-/Polystyrolkonzentrats mit einem Verdünnungsmittel, das Poly(trimethylenterephthalat) umfasst, um eine Poly(trimethylenterephthalat)-/Polystyrol-Spinnmischung herzustellen, die bezogen auf das Gesamtgewicht des Polymers 0,5 - 1,5 Gew. -% Polystyrol umfasst, wobei das Poly(trimethylenterephthalat)-/Polystyrolkonzentrat bezogen auf das Gesamtgewicht des Polymers 15 - 40 Gew. % Polystyrol umfasst und wobei das Polystyrol in der Spinnmischung in Form von Partikeln oder Tröpfchen mit einer durchschnittlichen Größe von weniger als 500 nm im Poly(trimethylenterephthalat) dispergiert ist.

2. Verfahren nach Anspruch 1, ferner umfassend Befördern der Spinnmischung in eine eine bestimmte Form aufweisende Öffnung und Extrudieren der Spinnmischung durch die eine bestimmte Form aufweisende Öffnung, um ein Extrudat zu bilden.

3. Verfahren nach Anspruch 1, wobei das Poly(trimethylenterephthalat) mindestens 98 Mol % Trimethylenterephthalat-Monomereinheiten umfasst und wobei dessen intrinsische Viskosität im Bereich von 0,90 - 1,2 dl/g liegt.

4. Verfahren nach Anspruch 2, wobei die eine bestimmte Form aufweisende Öffnung eine von einer Mehrzahl eine bestimmte Form aufweisender Öffnungen einer Spinndüse ist und das Extrudat eine Mehrzahl Filamente ist.

5. Verfahren nach Anspruch 2, wobei die Öffnung eine Strangöffnung ist, das Extrudat ein oder mehrere Stränge ist und das Verfahren ferner Zerschneiden des Strangs in Pellets umfasst.

6. Verfahren nach Anspruch 2, wobei die eine bestimmte Form aufweisende Öffnung eine Foliendüse und das Extrudat eine Folie ist.

7. Verfahren nach Anspruch 1, wobei das Konzentrat bezogen auf das Gesamtgewicht des Polymers 20 - 30 Gew. % Polystyrol umfasst.

8. Verfahren nach Anspruch 1, wobei es sich beim Polystyrol um ein Polystyrolhomopolymer handelt.

9. Verfahren nach Anspruch 1, wobei das Polystyrol Polystyrolhomopolymer in einer Konzentration von 20 - 30 Gew. % im Konzentrat ist und durch ein durchschnittliches Molekulargewicht von 75.000 - 200.000 D gekennzeichnet ist; wobei das Verfahren ferner Befördern der geschmolzenen Spinnmischung in eine Strangdüse, Extrudieren mindestens eines Strangs und Zerschneiden des Strangs in Pellets umfasst.

10. Verfahren nach Anspruch 1, wobei das Polystyrol Polystyrolhomopolymer in einer Konzentration von 20 - 30 Gew. % im Konzentrat ist und durch ein durchschnittliches Molekulargewicht von 75.000 - 200.000 D gekennzeichnet ist; wobei das Verfahren ferner Befördern der geschmolzenen Spinnmischung in eine eine Mehrzahl eine bestimmte Form aufweisender Öffnungen umfassende Spinndüse und Extrudieren einer Mehrzahl Filamente umfasst.

## Revendications

1. Procédé comprenant mélanger à l'état fondu un concentré de poly(téréphtalate de triméthylène)/polystyrène avec un diluant comprenant du poly(téréphtalate de triméthylène) pour former un mélange de filage de poly(téréphtalate de triméthylène)/polystyrène, le mélange de filage comprenant de 0,5 à 1,5 % en poids de polystyrène, sur la base du poids total de polymère, dans lequel le concentré de poly(téréphtalate de triméthylène)/polystyrène comprend de 15 à 40 % en poids de polystyrène, sur la base du poids total de polymère, et dans lequel le polystyrène dans le mélange de filage est dispersé dans le poly(téréphtalate de triméthylène) sous la forme de particules ou de gouttelettes ayant une grosseur moyenne de moins de 500 nanomètres.

2. Procédé selon la revendication 1, comprenant en outre acheminer le mélange de filage à un orifice façonné et extruder le mélange de filage à travers l'orifice façonné pour former un extrudat.

3. Procédé selon la revendication 1, dans lequel le poly(téréphtalate de triméthylène) comprend au moins 98 % en moles d'unités de monomère de téréphtalate de triméthylène et dont la viscosité intrinsèque est dans la plage de 0,90 à 1,2 décilitre/gramme.

4. Procédé selon la revendication 2, dans lequel l'orifice façonné est l'un d'une pluralité d'orifices façonnés d'une filière et l'extrudat est une pluralité de filaments.

5. Procédé selon la revendication 2, dans lequel l'orifice façonné est une filière à jonc, l'extrudat est un ou plusieurs fils et le procédé comprend en outre couper le fil en pastilles.

6. Procédé selon la revendication 2, dans lequel l'orifice façonné est une filière à fente et l'extrudat est un film.

7. Procédé selon la revendication 1, dans lequel le concentré comprend de 20 à 30 % en poids de polystyrène, sur la base du poids total de polymère.

8. Procédé selon la revendication 1, dans lequel le polystyrène est un homopolymère de polystyrène.

9. Procédé selon la revendication 1, dans lequel le polystyrène est un homopolymère de polystyrène à une concentration de 20 à 30 % en poids dans le concentré et est **caractérisé par** une masse moléculaire moyen en nombre de 75000 à 200000 daltons; le procédé comprenant en outre acheminer le mélange de filage fondu à une filière à jonc, extruder au moins un fil, et couper le fil en pastilles.

10. Procédé selon la revendication 1, dans lequel le polystyrène est un homopolymère de polystyrène à une concentration de 20 à 30 % en poids dans le concentré et est **caractérisé par** une masse moléculaire moyen en nombre de 75000 à 200000 daltons; le procédé comprenant en outre acheminer le mélange de filage à une filière comprenant une pluralité d'orifices façonnés et extruder une pluralité de filaments.
